# EUROPÄISCHE PATENTSCHRIFT

(11) **EP 2 655 874 B1**
(45) Veröffentlichungstag und Bekanntmachung des Hinweises auf die Patenterteilung: **03.06.2015**
(21) Anmeldenummer: 11822882.4
(22) Anmeldetag: 01.08.2011
(51) Int. Cl.: F03D 9/00, F03D 3/02, F03D 3/04, F03D 3/00

(54) **WINDKRAFT-ROTOR UND VERFAHREN ZUR ENERGIEERZEUGUNG DAMIT**
WIND-POWERED ROTOR AND POWER GENERATION METHOD THEREWITH
ROTOR D'ÉOLIENNE ÉOLIENNE ET PROCÉDÉ DE PRODUCTION ÉNERGÉTIQUE

(30) Priorität: 22.12.2010 DE 102010055687
(43) Veröffentlichungstag der Anmeldung: 30.10.2013
(73) Patentinhaber: Airbus Defence and Space GmbH, 85521 Ottobrunn (DE)
(72) Erfinder: SEIFERT, Jost, 85077 Manching (DE)
(86) Internationale Anmeldenummer: PCT/DE2011/001536
(87) Internationale Veröffentlichungsnummer: WO 2012/083907

(56) Entgegenhaltungen:
- EP-A2- 2 098 723
- WO-A1-2006/039727
- DE-A1- 3 501 807
- DE-U1-212008 000 104

## Beschreibung

Die vorliegende Erfindung betrifft einen Windkraft-Rotor, eine Windkraftanlage, die Verwendung eines Windkraft-Rotors in einer Windkraftanlage, sowie ein Verfahren zum Umwandeln von Windenergie in Antriebsenergie zur Erzeugung von elektrischem Strom.

Um Windenergie, beispielsweise zur Erzeugung elektrischer Energie, nutzen zu können, werden Rotoren verwendet, die durch den Wind in Rotation versetzt werden und dabei zum Beispiel einen Generator antreiben. Zumindest ein Teil der Windenergie wird dabei in elektrische Energie umgewandelt. Ein weiteres Einsatzgebiet von Rotoren sind Windkraftanlagen zur Verrichtung von Arbeit, wie beispielsweise zu Pump- oder Förderzwecken. Im Zusammenhang mit der Nutzung erneuerbarer Energiequellen ist auch die Nutzung der Windenergie von zunehmender Bedeutung.

WO 2006/039727 befasst sich mit Windturbinen mit vertikaler Achse und zeigt einen Rotor, der mit einer Vielzahl von vertikalen Lamellen ausgestattet ist, die zwischen zwei kreisförmigen Scheiben um einen zentrisch verlaufenden Schaft angeordnet sind. Der Rotor ist auf einer auf die Windströmungsrichtung bezogenen Seite mit Luftströmungsablenkungseinrichtungen versehen, um den lateralen Wind in Richtung der als Schaufeln wirkenden Lamellen umzulenken, um so die Effizienz zu erhöhen. Die Wind abweisenden Schutzeinrichtungen dienen nicht nur zum Windschutz der sich entgegen der Windströmungsrichtung drehenden Lamellen (zumindest auf dieser einen Seite), sondern auch dazu, in diesem Bereich nutzbare Luftströmung auf den Rotor zu lenken.

Eine Aufgabe der vorliegenden Erfindung besteht daher darin, eine möglichst effiziente Ausnutzung der Windenergie zur Verfügung zu stellen.

Diese Aufgabe wird durch einen Windkraft-Rotor, eine Windkraftanlage, die Verwendung eines Windkraft-Rotors in einer Windkraftanlage, sowie durch ein Verfahren zum Umwandeln von Windenergie in Antriebsenergie zur Erzeugung von elektrischem Strom nach einem der unabhängigen Ansprüche erreicht. Beispielhafte Ausführungsformen sind in den abhängigen Ansprüchen dargestellt.

Gemäß einem ersten Aspekt der Erfindung ist ein Windkraft-Rotor vorgesehen, der eine erste Rotoreinrichtung und eine zweite Rotoreinrichtung aufweist. Die erste Rotoreinrichtung dreht sich um eine erste Rotationsachse und weist wenigstens zwei Rotorblätter auf, die sich auf einer Umlaufbahn um die erste Rotationsachse bewegen. Die Rotorblätter sind derart angeordnet, dass sie bei Rotation um die erste Rotationsachse eine virtuelle erste Mantelfläche eines virtuellen ersten Rotationskörpers beschreiben. Die zweite Rotoreinrichtung dreht sich um eine zweite Rotationsachse und weist einen zweiten Rotationskörper mit einer geschlossenen zweiten Mantelfläche auf. Der zweite Rotationskörper ist wenigstens teilweise innerhalb des virtuellen ersten Rotationskörpers angeordnet. Die erste Rotoreinrichtung ist durch Wind in einer ersten Rotationsrichtung antreibbar zur Umwandlung der Windkraft in eine Antriebskraft, und die zweite Rotoreinrichtung weist eine Antriebsvorrichtung auf und ist in einer zweiten Rotationsrichtung antreibbar, die zur ersten Rotationsrichtung entgegengesetzt verläuft.

Gemäß einer beispielhaften Ausführungsform der Erfindung ist die zweite Rotoreinrichtung eingerichtet, eine Ablenkung einer durch Wind hervorgerufenen Luftströmung innerhalb der ersten Rotoreinrichtung auf der dem Wind abgewandten Seite entgegen der ersten Rotationsrichtung zu bewirken.

Beispielsweise ruft die Umlenkung an wenigstens einem der Rotorblätter der ersten Rotoreinrichtung eine Anströmung hervor, die einen zusätzlichen Vortrieb und somit ein zusätzliches Antriebsdrehmoment erzeugt.

Durch Drehen des inneren Rotationskörpers, d.h. des zweiten Rotationskörpers, wird ein Magnus-Effekt erzeugt, der zu einer Umlenkung einer vorbeiströmenden Luftströmung führt. Durch die Umlenkung der Luft, bzw. Ablenkung der Luftströmung wird ein Rotorblatt, das sich aufgrund einer fortgeschrittenen Rotation bereits im Wind abgewandten Bereich der Rotationsbahn befindet, weiter einer Luftströmung ausgesetzt, so dass ein entsprechender Vortrieb erzeugt und eine Rotation der ersten Rotoreinrichtung bewirkt wird. Die Umlenkung bewirkt also, dass ein sich im hinteren Bereich befindliches Rotorblatt einer zusätzlichen Windanströmung ausgesetzt wird, so dass durch dieses zusätzliche Umströmen des Rotorblatts ein entsprechender Vortrieb erzeugt werden kann, der als zusätzliche Antriebskraft zur Verfügung steht. Dadurch wird ein verbesserter Wirkungsgrad zur Verfügung gestellt.

Die Umlenkung bewirkt darüber hinaus eine verbesserte Anfahreigenschaft des Windkraft-Rotors. Der erfindungsgemäße Windkraft-Rotor läuft bereits bei geringeren Windgeschwindigkeiten an, im Vergleich zu Lösungen ohne den zweiten, d.h. inneren Rotor. Die Umlenkung dient sozusagen als Anfahrhilfe. Es können daher bereits relativ niedrige Windgeschwindigkeiten genutzt werden, bei denen andere Rotoren noch nicht betrieben werden können.

Gemäß einer beispielhaften Ausführungsform der Erfindung ist die erste Rotationsachse eine erste vertikale Rotationsachse und die zweite Rotationsachse ist eine zweite vertikale Rotationsachse.

Gemäß einer alternativen beispielhaften Ausführungsform der Erfindung ist die erste Rotationsachse eine erste horizontale Rotationsachse und die zweite Rotationsachse ist eine zweite horizontale Rotationsachse.

Beispielsweise können die erste Rotationsachse und auch die zweite Rotationsachse als, bezogen auf die Horizontale und die Vertikale, schräg, bzw. geneigt verlaufende Rotationsachsen ausgebildet sein.

Die Begriffe "vertikal" und "horizontal" beziehen sich auf den montierten Zustand, d.h. den Betriebszustand.

Beispielsweise verlaufen die erste und die zweite Rotationsachse parallel zueinander. Die erste und die zweite Rotationsachse können auch konzentrisch angeordnet sein, d.h. die erste Rotationsachse entspricht in ihrer Lage der zweiten Rotationsachse.

Diese genannten Ausführungsvarianten treffen sowohl für vertikale, als auch horizontale oder geneigte Rotationsachsen zu, was insbesondere auch für die im Folgenden genannten Ausführungsbeispiele und auch die anhand der Figuren beschriebenen Ausführungsformen zutrifft.

Die erste und die zweite Rotationsachse können auch versetzt zueinander verlaufen, wobei der Versatz derart ausgebildet ist, dass der zweite Rotationskörper während der Rotation um die zweite Rotationsachse wenigstens teilweise innerhalb des virtuellen ersten Rotationskörpers angeordnet ist, und insbesondere die virtuelle erste Mantelfläche nicht berührt oder kreuzt.

Der Versatz kann beispielsweise mittels einer Einstellvorrichtung einstellbar sein, zum Beispiel in Abhängigkeit der Windstärke oder auch Windrichtung.

Die erste Rotationsachse kann auch geneigt zur zweiten Rotationsachse verlaufen, wobei die Neigung derart ausgebildet ist, dass der zweite Rotationskörper während der Rotation um die zweite Rotationsachse wenigstens teilweise innerhalb des virtuellen ersten Rotationskörpers angeordnet ist, und insbesondere die virtuelle erste Mantelfläche nicht berührt oder kreuzt.

Die Neigung der beiden Rotationsachsen zueinander kann mittels einer Neigungseinstellvorrichtung ebenfalls einstellbar ausgebildet sein.

Die Rotorblätter umfahren während der Rotation den zweiten Rotationskörper wenigstens teilweise, d.h. wenigstens ein Teilbereich des zweiten Rotationskörpers wird von den Rotorblättern umkreist.

Die Rotorblätter weisen jeweils eine Längsausdehnung auf, und erstrecken sich in Richtung der ersten Rotationsachse, wobei sich der Begriff "in Richtung" darauf bezieht, dass die Längsausdehnung zwischen einem ersten Punkt und einem zweiten Punkt erfolgt, wobei die Verbindungslinie des ersten und des zweiten Punkts eine Richtungskomponente aufweist, die parallel zur ersten Rotationsachse verläuft.

Die Rotorblätter können auch als Repeller bezeichnet werden, die vom Wind angetrieben werden.

Die Rotorblätter können bezogen auf die tangentiale Winkellage feststehend ausgebildet sein, d.h. sie ändern ihre Winkellage während der Rotation nicht.

Beispielsweise weisen die Rotorblätter einen symmetrischen Querschnitt auf. Gemäß einem weiteren Beispiel weisen die Rotorblätter einen symmetrischen Flügelquerschnitt mit einer spitz zulaufenden ersten Kante und einer rund ausgebildeten zweiten Kante auf, wobei die zweite Kante in Drehrichtung vorne angeordnet ist.

Die Rotorblätter können aber auch einen Flügelquerschnitt mit Wölbung aufweisen. Die Wölbung kann zum Beispiel auch durch eine bewegliche Klappe an der Flügelvorderkante oder Flügelhinterkante ausgeführt werden.

Neben der erwähnten Variante mit zwei Rotorblättern können auch drei, vier oder mehr Rotorblätter vorgesehen sein. Dies trifft selbstverständlich auch für die unterschiedlichen Kombinationen der oberhalb und im folgenden beschriebenen Merkmale zu.

Die Rotorblätter können in Rotorblattsegmente unterteilt sein, wobei die Rotorblattsegmente unterschiedlich ausgebildet sein können, so dass die Rotorblätter auf die gesamte Länge unterschiedlich ausgebildet sind.

Gemäß einer beispielhaften Ausführungsform weist die erste Rotoreinrichtung einen Darrieus-Rotor auf.

Beispielsweise sind die Rotorblätter an ihren beiden Enden, zum Beispiel bei vertikal verlaufenden Rotationsachsen am oberen und unteren Ende, bzw. bei horizontal verlaufenden Rotationsachsen an den seitlichen Enden, näher an der Rotationsachse angeordnet als in dem Bereich zwischen den beiden Enden.

Gemäß einer beispielhaften Ausführungsform der Erfindung sind die Rotorblätter an ihren beiden Enden näher an der Rotationsachse angeordnet, als in dem Bereich zwischen den beiden Enden, wobei die Rotorblätter bogenförmig nach außen ragen.

Die Rotorblätter können in Längsrichtung hyperbolisch geformt sein, zum Beispiel können sie eine Kettenform aufweisen (Cosinus Hyperbolicus).

Die Rotorblätter können aber auch in Längsrichtung gerade ausgebildet sein und parallel zur ersten Rotationsachse verlaufen, oder auch geneigt zur ersten Rotationsachse.

Gemäß einer beispielhaften Ausführungsform der Erfindung verlaufen die Rotorblätter parallel zur ersten und zur zweiten Rotationsachse. Beispielsweise können die Rotorblätter als H-Darrieus-Rotor ausgebildet sein.

Gemäß einem weiteren Beispiel können die Rotorblätter auch wendelförmig gebogen sein.

Der zweite Rotationskörper kann teilweise in axialer Richtung aus dem virtuellen ersten Rotationskörper herausragen. Der zweite Rotationskörper kann auch an einem Stirnende oder beiden Stirnenden aus dem virtuellen ersten Rotationskörper herausragen.

Gemäß einer beispielhaften Ausführungsform der Erfindung ist der zweite Rotationskörper vollständig innerhalb des virtuellen ersten Rotationskörpers angeordnet.

Der zweite Rotationskörper ist dabei innerhalb der Umlaufbahn des ersten Rotationskörpers angeordnet.

Die geschlossene zweite Mantelfläche ist eine Umfangsfläche.

Der zweite Rotationskörper kann einen über die zweite Rotationsachse gleichbleibenden kreisförmigen Querschnitt (Durchmesser) aufweisen und einen Zylinder bilden.

Der zweite Rotationskörper kann auch einen sich über die zweite Rotationsachse gleichmäßig verändernden kreisförmigen Durchmesser aufweisen und einen Kegelstumpf bilden.

Der zweite Rotationskörper kann auch aus unterschiedlichen Kegelstumpfsegmenten und/oder Zylindersegmenten zusammengesetzt sein. Gemäß einer beispielhaften Ausführungsform der Erfindung weist der zweite Rotationskörper entlang der zweiten Rotationsachse unterschiedliche Durchmesser auf.

Der zweite Rotationskörper kann in seinem Umfang an die virtuelle erste Mantelfläche angepasst sein, zum Beispiel kann er ein definiertes Verhältnis und/oder eine definierte Differenz zu dieser bilden.

Der zweite Rotationskörper kann in einem Längsschnitt entlang der zweiten Rotationsachse eine hyperbolische Kontur aufweisen.

Der zweite Rotationskörper kann in Segmente unterteilt sein, die unterschiedlich schnell antreibbar sind.

Der zweite Rotationskörper kann im Bereich seines ersten und/oder zweiten Endes eine über die zweite Mantelfläche hinaus stehende Endscheibe aufweisen. Alternativ oder zusätzlich kann der zweite Rotationskörper eine Vielzahl von Scheiben aufweisen, die zwischen den beiden Enden angeordnet sind, wobei die Scheiben einen größeren Durchmesser aufweisen als eine oder beide benachbarte Mantelflächensegmente.

Die Antriebsvorrichtung kann eine Kopplung, zum Beispiel eine direkte Kopplung, der ersten Rotoreinrichtung mit der zweiten Rotoreinrichtung aufweisen, wobei eine Umkehr der Rotationsrichtung der zweiten Rotoreinrichtung vorgesehen ist.

Beispielsweise kann die Windkraft, die auf die erste Rotoreinrichtung wirkt, auch die zweite Rotoreinrichtung antreiben.

Gemäß einem weiteren Beispiel kann eine Anfahrhilfe vorgesehen sein, die ein Anfahren des Rotors unterstützt.

Gemäß einer beispielhaften Ausführungsform der Erfindung weist die Antriebsvorrichtung eine Getriebeeinrichtung zwischen der ersten Rotoreinrichtung und der zweiten Rotoreinrichtung auf, wobei die Getriebeeinrichtung neben der Umkehr der Rotationsrichtung eine Übersetzung der Rotationsgeschwindigkeit bewirkt.

Das Übersetzungsverhältnis der Getriebeeinrichtung kann veränderbar sein, beispielsweise in Stufen oder stufenlos.

Beispielsweise kann die Getriebeeinrichtung eine von der Umdrehungsgeschwindigkeit der ersten Rotoreinrichtung abhängige Übersetzung aufweisen.

Beispielsweise kann die Antriebsvorrichtung auch durch einen Elektromotor gelöst werden, der durch elektrischen Strom antreibbar ist.

Beispielsweise kann der elektrische Strom mittels der Antriebskraft erzeugt werden, d.h. der Elektromotor kann z.B. durch Generatorstrom angetrieben werden.

Z.B. kann der Elektromotor einen Regler aufweisen und ein variables Übersetzungsverhältnis bieten.

Die Übersetzung kann dabei abhängig von einer tatsächlichen Windanströmgeschwindigkeit bzw. der Windstärke sein.

Der zweite Rotationskörper kann mit einer Umfangsgeschwindigkeit angetrieben sein, die das ca. 0,5 - bis 4-fache der Anströmgeschwindigkeit der ersten Rotoreinrichtung beträgt.

Die erste Rotoreinrichtung kann eine Umfangsgeschwindigkeit aufweisen, die ca. 50 % der Anströmgeschwindigkeit des Windes beträgt.

Das Rotationsverhältnis zwischen der ersten und der zweiten Rotoreinrichtung beträgt beispielsweise ca. 1:2 bis 1:8, wobei die Drehrichtungen, wie bereits erwähnt, gegensinnig verlaufen.

Das Verhältnis von Anströmgeschwindigkeit des Windkraft-Rotors / Umfangsgeschwindigkeit der ersten Rotoreinrichtung / Umfangsgeschwindigkeit des zweiten Rotationskörpers beträgt ca. 0,5 / 1 / 1 bis 4, wobei auch hier die Drehrichtungen der beiden Rotoreinrichtungen, wie bereits erwähnt, gegensinnig verlaufen. Die Umfangsgeschwindigkeit bezieht sich dabei auf die Umfangsgeschwindigkeit im Bereich des maximalen Durchmessers.

Gemäß einer beispielhaften Ausführungsform der Erfindung ist die Antriebsvorrichtung eingerichtet, den zweiten Rotationskörper wahlweise auch in der ersten Rotationsrichtung zu drehen.

Dabei wird der Rotationskörper in die gleiche Richtung gedreht wie die Rotorblätter. Dies kann beispielsweise bei zu großen Windgeschwindigkeiten als eine Art Bremswirkung eingesetzt werden, da durch das gleichsinnige Drehen der Wirkungsgrad, bzw. die Effizienz, wesentlich verschlechtert wird, im Gegensatz zur erfindungsgemäßen gegensinnigen Rotation des ersten und des zweiten Rotationskörpers, bei dem es, wie oberhalb dargestellt, zu einer Verbesserung der Effizienz, bzw. zu einer besseren Ausnutzung der Windenergie kommt.

Gemäß einem zweiten Aspekt der Erfindung ist eine Windkraftanlage vorgesehen, die einen Rotor zur Umwandlung von Windbewegung in eine Drehbewegung, einen Generator zur Umwandlung der Bewegungsenergie der Drehbewegung in elektrische Energie, und eine Getriebevorrichtung zur Kopplung des Rotors an den Generator zur Übertragung der Drehbewegung an den Generator aufweist. Der Rotor ist dabei als ein Windkraft-Rotor nach einem der vorhergehend beschriebenen Ausführungsformen und Beispiele, bzw. Aspekte, ausgebildet.

Die Rotorachse kann beispielsweise vertikal oder horizontal, oder auch geneigt angeordnet sein.

Der Rotor kann dabei zu einer Anströmrichtung ausgerichtet werden.

Beispielsweise weist die Windkraftanlage eine Tragkonstruktion auf, in welcher der Windkraft-Rotor, die Getriebevorrichtung und der Generator gehalten sind.

Die Tragkonstruktion kann beispielsweise an einem Fundament im Erdboden verankert sein, oder auch an einer baulichen Struktur, zum Beispiel an einem Bauwerk, wie beispielsweise einem Gebäude oder einem Brückenbauwerk.

Gemäß einem dritten Aspekt der Erfindung ist auch die Verwendung eines Windkraft-Rotors nach einem der vorhergehend genannten Ausführungsformen, Beispiele und Aspekte in einer Windkraftanlage vorgesehen.

Gemäß einem vierten Aspekt der Erfindung ist ein Verfahren zum Umwandeln von Windenergie in Antriebsenergie zur Erzeugung von elektrischem Strom vorgesehen, das die folgenden Schritte umfasst:
a) Rotieren einer ersten Rotoreinrichtung um eine erste Rotationsachse in einer ersten Rotationsrichtung durch Windkraft, wobei die erste Rotoreinrichtung wenigstens zwei Rotorblätter aufweist, die sich auf einer Umlaufbahn um die erste Rotationsachse bewegen, wobei die Rotorblätter derart angeordnet sind, dass sie bei Rotation um die erste Rotationsachse eine virtuelle erste Mantelfläche eines virtuellen ersten Rotationskörpers beschreiben;
b) Rotieren einer zweiten Rotoreinrichtung um eine zweite Rotationsachse in einer zweiten Rotationsrichtung, die der ersten Rotationsrichtung entgegengesetzt ist, durch eine Antriebsvorrichtung, wobei die zweite Rotoreinrichtung einen zweiten Rotationskörper mit einer geschlossenen zweiten Mantelfläche aufweist, und wobei der zweite Rotationskörper wenigstens teilweise innerhalb des virtuellen ersten Rotationskörpers angeordnet ist; wobei die zweite Rotoreinrichtung eine Ablenkung einer durch Wind hervorgerufenen Luftströmung innerhalb der ersten Rotoreinrichtung auf der dem Wind abgewandten Seite entgegen der ersten Rotationsrichtung bewirkt; und
c) Antreiben eines Stromgenerators durch die erste Rotoreinrichtung.

Es sei darauf hingewiesen, dass gemäß der Erfindung neben der Erzeugung von elektrischem Strom die Antriebsenergie, die aus der Windenergie gewonnen, bzw. umgewandelt wird, auch für andere Arbeitszwecke eingesetzt werden kann.

Gemäß einem Aspekt der Erfindung ist eine Kombination von zwei unterschiedlichen Rotoreinrichtungen, nämlich einem sozusagen ersten Teilrotor mit Rotorblättern, kombiniert mit einem als geschlossener Körper ausgebildeten zweiten Rotationskörper vorgesehen, bei dem der innenliegende geschlossene Rotationskörper ebenso wie der erste Rotor dem anströmenden Wind ausgesetzt ist, jedoch wird nur der erste Rotor, nämlich die Rotorblätter, vom Wind selbst angetrieben. Im Gegensatz dazu wird der zweite Rotor, d.h. der zweite Rotationskörper, durch Zuführen einer Antriebsenergie angetrieben. Diese kann z.B. aus der Windkraft selbst gewonnen werden. Der Antrieb erfolgt dabei erfindungsgemäß entgegen der Rotationsrichtung der Rotorblätter, die vom Wind angetrieben werden. Die gegensinnige Rotation bewirkt dabei eine Umlenkung des Luftstroms, der den Windkraft-Rotor durchströmt, d.h. der Luftströmung, die zwischen den Rotorblättern die erste Rotoreinrichtung durchströmen, bzw. dabei auch die Rotorblätter in Bewegung versetzen, indem an den Rotorblättern Auftriebskräfte, bzw. Vortriebskräfte (je nach Anordnung) hervorgerufen werden. Durch die Umlenkung mittels des zweiten Rotationskörpers wird eine bezogen auf die Rotorblätter günstigere Luftströmung bewirkt, so dass eine bezogen auf die Erzeugung von Antriebskräften bessere Ausnutzung der Windenergie zur Verfügung gestellt wird.

Es sei darauf hingewiesen, dass die Merkmale der Ausführungsbeispiele und Aspekte der Vorrichtungen auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf Ausführungsbeispiele der Erfindung eingegangen. Es zeigen:
- **Fig. 1**: eine erste beispielhafte Ausführungsform eines Windkraft-Rotors gemäß der vorliegenden Erfindung, wobei Fig. 1A eine erste Blickrichtung zeigt, und Fig. 1B eine dazu quer verlaufende zweite Blickrichtung;
- **Fig. 2A**: ein weiteres Ausführungsbeispiel eines Windkraft-Rotors gemäß der vorliegenden Erfindung;
- **Fig. 2B**: eine Rotoreinrichtung ohne eine erfindungsgemäße zweite Rotoreinrichtung;
- **Fig. 2C**: eine weitere Ausführungsform eines Windkraft-Rotors gemäß der vorliegenden Erfindung;
- **Fig. 3**: eine schematische Darstellung weiterer Merkmale eines Beispiels eines Windkraft-Rotors gemäß der vorliegenden Erfindung;
- **Fig. 4**: eine perspektivische Skizze eines weiteren Ausführungsbeispiels eines Windkraft-Rotors gemäß der vorliegenden Erfindung;
- **Fig. 5**: eine weitere perspektivische Darstellung eines weiteren Ausführungsbeispiels eines Windkraft-Rotors gemäß der vorliegenden Erfindung;
- **Fig. 6**: ein weiteres Ausführungsbeispiel eines Windkraft-Rotors gemäß der vorliegenden Erfindung;
- **Fig. 7**: ein weiteres Ausführungsbeispiel eines Windkraft-Rotors mit einer Vorrichtung zum Versatz von Rotationsachsen gemäß der vorliegenden Erfindung;
- **Fig. 8**: ein weiteres Ausführungsbeispiel mit versetzten Rotationsachsen gemäß der vorliegenden Erfindung;
- **Fig. 9A bis 9B**: Ausführungsbeispiele eines Rotorblatts im Querschnitt gemäß der der vorliegenden Erfindung;
- **Fig. 10A bis 10B**: Ausführungsbeispiele eines zweiten Rotationskörpers gemäß der vorliegenden Erfindung;
- **Fig. 11A bis 11C**: Ausführungsbeispiele für erste Rotoreinrichtungen mit wenigstens zwei Rotorblättern gemäß der vorliegenden Erfindung;
- **Fig. 12A bis 12C**: weitere Ausführungsbeispiele für Windkraft-Rotoren gemäß der vorliegenden Erfindung;
- **Fig. 13A bis 13C**: weitere Ausführungsbeispiele für einen zweiten Rotationskörper gemäß der vorliegenden Erfindung;
- **Fig. 14A bis 14B**: weitere Ausführungsbeispiele für einen zweiten Rotationskörper gemäß der vorliegenden Erfindung;
- **Fig. 15**: ein weiteres Ausführungsbeispiel für einen Windkraft-Rotor gemäß der vorliegenden Erfindung;
- **Fig. 16**: ein Ausführungsbeispiel für eine Windkraftanlage gemäß der vorliegenden Erfindung; und
- **Fig. 17**: ein Ausführungsbeispiel für ein Verfahren zum Umwandeln von Windenergie in Antriebsenergie gemäß der vorliegenden Erfindung.

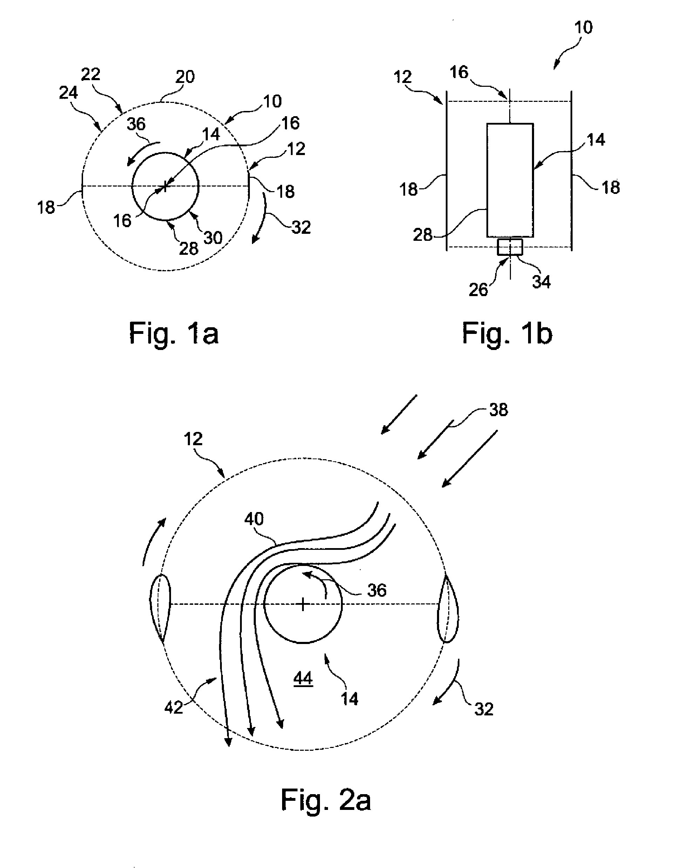

Fig. 1 zeigt einen Windkraft-Rotor 10 mit einer ersten Rotoreinrichtung 12 und einer zweiten Rotoreinrichtung 14. Die erste Rotoreinrichtung 12 dreht sich um eine erste Rotationsachse 16 und weist wenigstens zwei Rotorblätter 18 auf, die sich auf einer Umlaufbahn 20 um die erste Rotationsachse 16 bewegen.

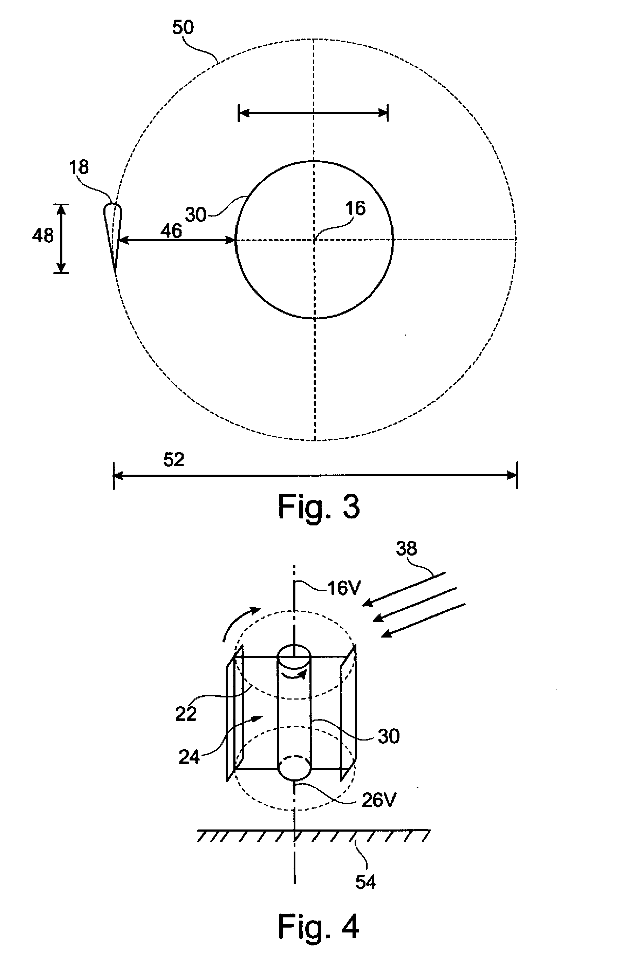

Die Rotorblätter sind dabei derart angeordnet, dass sie bei Rotation um die erste Rotationsachse eine virtuelle erste Mantelfläche 22 eines virtuellen ersten Rotationskörpers 24 beschreiben, wobei dies in Fig. 4 besser zu erkennen ist.

Die zweite Rotoreinrichtung 14 dreht sich um eine zweite Rotationsachse 26 und weist einen zweiten Rotationskörper 28 mit einer geschlossenen zweiten Mantelfläche 30 auf, die ebenfalls in Fig. 4 besser zu erkennen ist. Der zweite Rotationskörper 28 ist wenigstens teilweise innerhalb des virtuellen ersten Rotationskörpers 24 angeordnet.

Die erste Rotoreinrichtung ist durch Wind in einer ersten Rotationsrichtung 32 antreibbar, wobei dies beispielsweise anhand von Fig. 2A näher erläutert wird. Die zweite Rotoreinrichtung weist eine Antriebsvorrichtung 34 auf (siehe Fig. 1 B) und ist in einer zweiten Rotationsrichtung 36 antreibbar, die zur ersten Rotationsrichtung 32 entgegengesetzt verläuft.

Fig. 1B zeigt den Windkraft-Rotor 10 in einer quer zu Fig. 1A verlaufenden Darstellung, bzw. Sichtweise.

Wie in Fig. 2A gezeigt ist, ist die zweite Rotoreinrichtung 14 eingerichtet, eine Ablenkung einer durch Wind hervorgerufenen Luftströmung innerhalb der ersten Rotoreinrichtung 12 auf der dem Wind abgewandten Seite entgegen der ersten Rotationsrichtung 32 zu bewirken. Die durch Wind hervorgerufene Luftströmung ist durch drei Pfeile 38 außerhalb der ersten Rotoreinrichtung 12 angedeutet, sowie durch drei innerhalb der ersten Rotoreinrichtung verlaufenden Pfeile 40, die in ihrem Verlauf mittels einer Richtungsänderung 42 die Ablenkung verdeutlichen.

Die dem Wind abgewandte Seite ist in Fig. 2A mit Bezugsziffer 44 angedeutet.

Es wird also im sozusagen hinteren Bereich, d.h. auf der Leeseite, eine von der Haupt-Windrichtung und damit der Haupt-Windströmung abweichende Luftströmung zur Verfügung gestellt, die sich günstig auf die Rotorblätter auswirkt, da die abgelenkte Luftströmung den Rotorblättern sozusagen entgegen läuft, um die Rotorblätter derart anzuströmen, dass dort eine zusätzliche Vortriebskraft erzeugt wird.

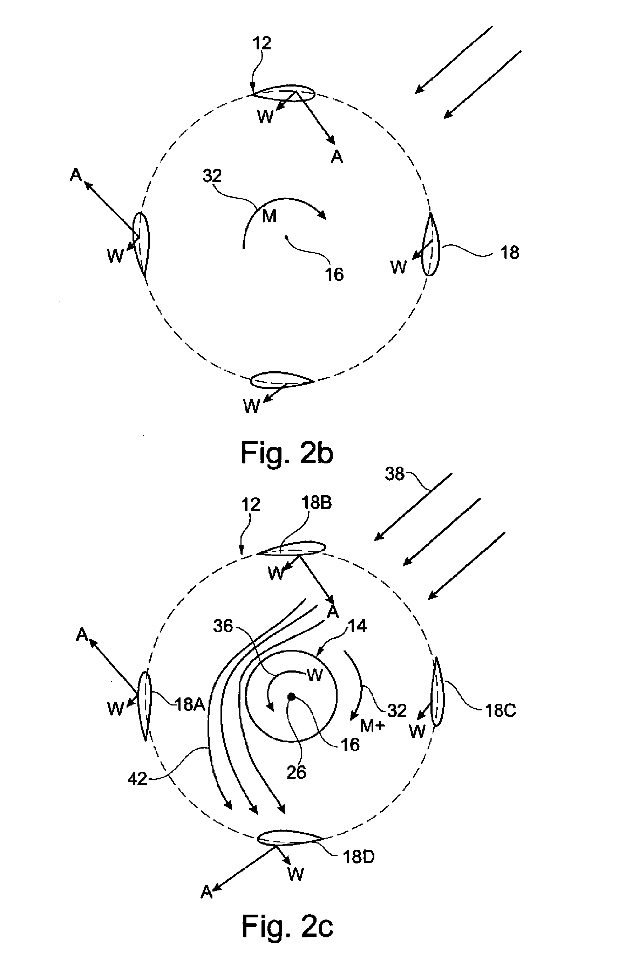

In Fig. 2B sind die durch Windeinwirkung bei einem Rotorstillstand hervorgerufenen Kraftvektoren eingezeichnet, wobei in Fig. 2B keine zweite Rotoreinrichtung 14, wie dies in der Erfindung vorgesehen ist, angeordnet ist. An den Rotorblättern 18 sind die jeweiligen durch den Wind hervorgerufenen Luftwiderstandkräfte W und die aufgrund der Luftströmung entlang der Rotorblätter hervorgerufene Vortrieb bzw. Auftriebskräfte A mit entsprechenden Pfeilen unterschiedlicher Länge qualitativ dargestellt.

Die gemäß der Erfindung erzeugten Kräfte, bzw. Kraftvektoren sind in Fig. 2C durch eingezeichnete Vektoren für vier Rotorblätter 18a, 18b, 18c und 18d dargestellt. Bei der Darstellung ist der Magnus-Effekt, der durch die Rotation des zweiten Rotationskörpers hervorgerufen wird, berücksichtigt.

Anhand der Kräftevektoren für das vierte Rotorblatt 18d wird ersichtlich, dass bei der in Fig. 2B gezeigten Variante ohne die zweite Rotoreinrichtung 14 wesentlich geringere Kräfte erzeugt werden als in Fig. 2C, d.h. es erfolgt eine schlechtere Ausnutzung der Windenergie.

An dieser Stelle sei darauf hingewiesen, dass die erste Rotoreinrichtung 12 neben den in den meisten der Figuren gezeigten zwei Rotorblättern auch drei, vier oder mehr Rotorblätter aufweisen kann, wobei dies nicht näher dargestellt ist.

Gemäß einem in Fig. 3 gezeigten Ausführungsbeispiel ist zwischen der zweiten Mantelfläche 30 und den rotierenden Rotorblättern 18 in radialer Richtung ein Abstand 46 vorgesehen, der beispielsweise das 1- bis 2-Fache einer Profiltiefe 48 eines Rotorblatts 18 beträgt. Die Profiltiefe bezeichnet dabei die Ausdehnung des Rotorblatts in Rotationsrichtung. Die Rotorblätter sind entlang einer Kreislinie 50 um die erste Rotationsachse 16 angeordnet, wobei der Kreis 50 einen Durchmesser 52 aufweist, der das 5- bis 8-Fache der Profiltiefe 48 eines Rotorblatts beträgt. Gemäß einem weiteren, in Fig. 4 gezeigten Ausführungsbeispiels ist die erste Rotationsachse 16 eine erste vertikale Rotationsachse 16_{V} und die zweite Rotationsachse 26 ist eine zweite vertikale Rotationsachse 26v.

Der Begriff "vertikal" bezieht sich dabei auf den montierten Zustand, was schematisch mit einer Boden-, bzw. Basisschraffur 54 angedeutet ist.

Die Merkmale können auch einzeln vorgesehen sein, und jeweils auch mit anderen Werten kombiniert werden.

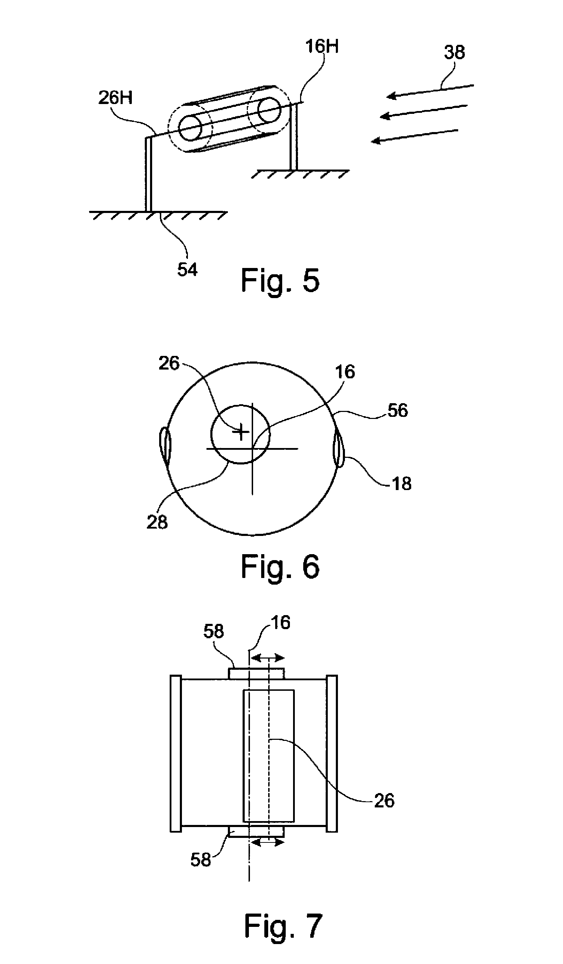

Wie in Fig. 5 gezeigt, kann die erste Rotationsachse 16 als eine erste horizontale Rotationsachse 16_{H}, und die zweite Rotationsachse 26 als eine zweite horizontale Rotationsachse 26_{H} ausgebildet sein.

Die erste und die zweite Rotationsachse 16, 26 können konzentrisch angeordnet sein, wie dies in den Fig. 1 bis 5 dargestellt ist. Gemäß einem weiteren Ausführungsbeispiel, das in Fig. 6 gezeigt ist, können die erste und die zweite Rotationsachse 16, 26 auch versetzt zueinander verlaufen, wobei der zweite Rotationskörper 28 während der Rotation um die zweite Rotationsachse 26 innerhalb einer Bewegungsbahn 56 der Rotorblätter 18 angeordnet ist.

Der Versatz kann beispielsweise mittels einer Einstellvorrichtung 58 einstellbar sein, wie dies in Fig. 7 angedeutet ist.

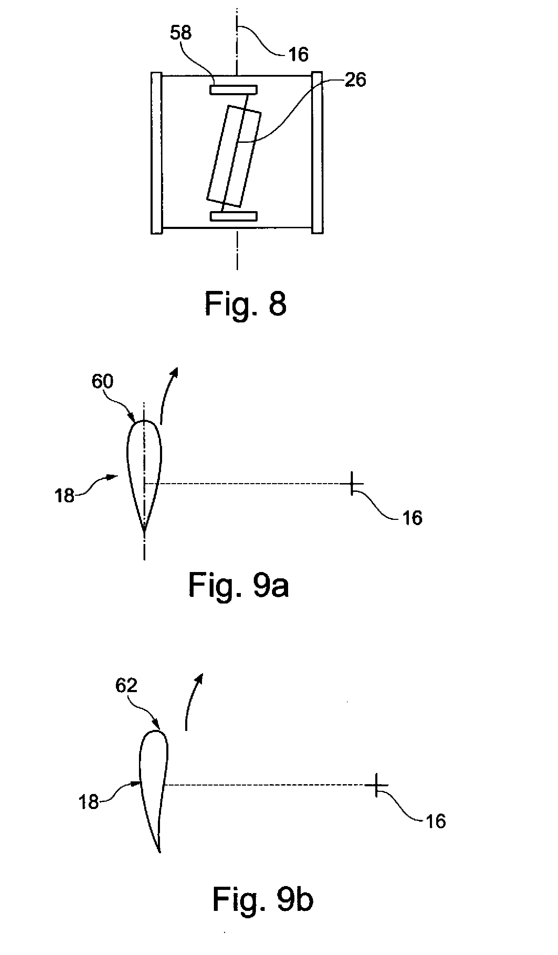

Während Fig. 7 ein paralleles Verschieben der beiden Rotationsachsen 16, 26 zeigt, kann mittels der Einstellvorrichtung 58 auch ein geneigter Verlauf der zweiten Rotationsachse 26 in Bezug auf die erste Rotationsachse 16 eingestellt werden, was in Fig. 8 angedeutet ist.

Die Rotorblätter können einen symmetrischen Querschnitt, beispielsweise einen symmetrischen Flügelquerschnitt 60 aufweisen, wie dies in Fig. 9A in einem Schnitt für einen Ausschnitt gezeigt ist.

Fig. 9B zeigt eine Ausführungsform, bei der die Rotorblätter 18 einen Flügelquerschnitt 62 mit einer Wölbung aufweisen.

Es sei darauf hingewiesen, dass die erste Rotoreinrichtung 12 mit unterschiedlichen Rotorblättern, bzw. unterschiedlichen Querschnittsformen der Rotorblätter 18 ausgebildet sein kann.

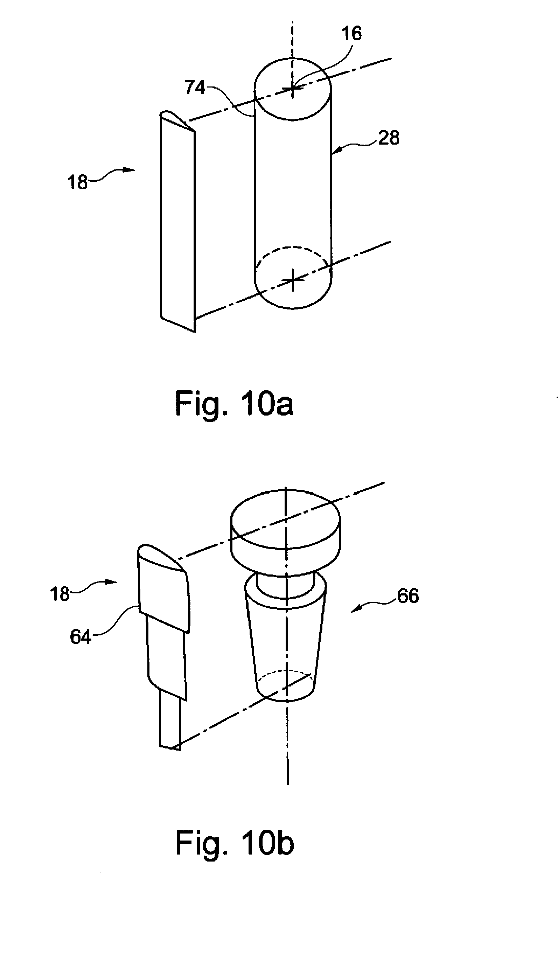

Die Rotorblätter 18 können unabhängig von ihrer Querschnittsform mit einem durchgehenden Profil ausgebildet sein, wie dies in Fig. 10A in einer perspektivischen Ausschnittsansicht gezeigt ist.

Die Rotorblätter 18 können aber auch in Rotorblattsegmente 64 unterteilt sein, und auf die gesamte Länge unterschiedlich ausgebildet sein, wie dies in Fig. 10B gezeigt ist.

Wie ebenfalls in Fig. 10A bzw. 10B dargestellt, kann der zweite Rotationskörper 28 mit einer durchgehenden, bzw. gleichmäßigen Form ausgebildet sein, wie dies in Fig. 10A gezeigt ist, oder ebenfalls in Segmente 66 unterteilt sein, wie dies in Fig. 10B gezeigt ist.

Es sei darauf hingewiesen, dass die genannten Merkmale auch unterschiedlich kombiniert werden können, insbesondere kann ein durchgehendes Rotorblatt mit einem segmentierten zweiten Rotationskörper 28, und ein segmentiertes Rotorblatt 18 mit einem durchgehenden zweiten Rotationskörper 28 kombiniert sein, d.h. die Segmentierung ist nicht auf die gezeigten Ausführungsvarianten in der Kombination mit dem jeweiligen anderen Rotor beschränkt.

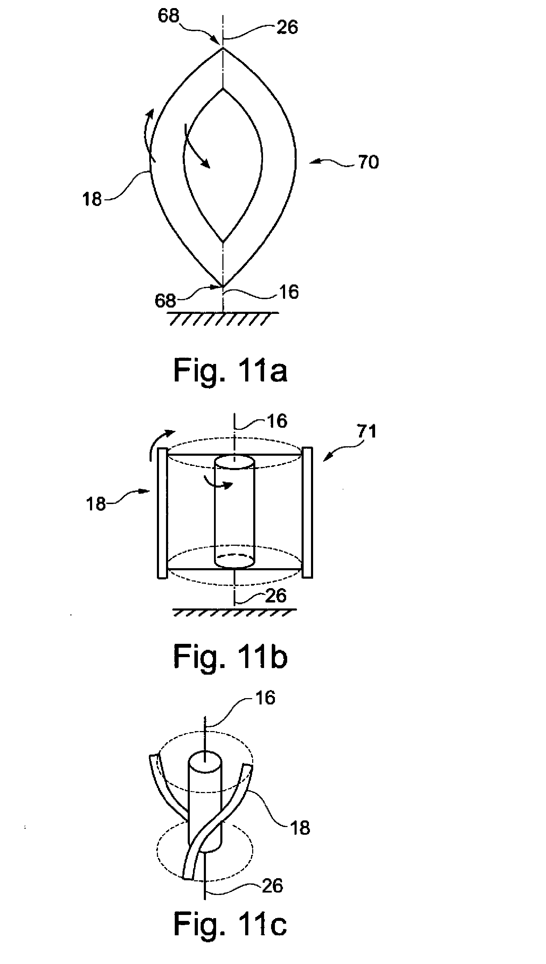

Die Rotorblätter 18 können an ihren beiden Enden 68 näher an der Rotationsachse 16 angeordnet sein, als in einem Bereich 70 zwischen den beiden Enden 68, wobei die Rotorblätter beispielsweise bogenförmig nach außen ragen, wie dies in Fig. 11A gezeigt ist.

Alternativ dazu können die Rotorblätter 18 parallel zur ersten Rotationsachse 16 verlaufen (siehe Fig. 11 B), und können insbesondere als H-Darrieus-Rotor 71 ausgebildet sein.

Die Rotorblätter 18 können, wie in Fig. 11C gezeigt, auch wendelförmig gebogen ausgebildet sein.

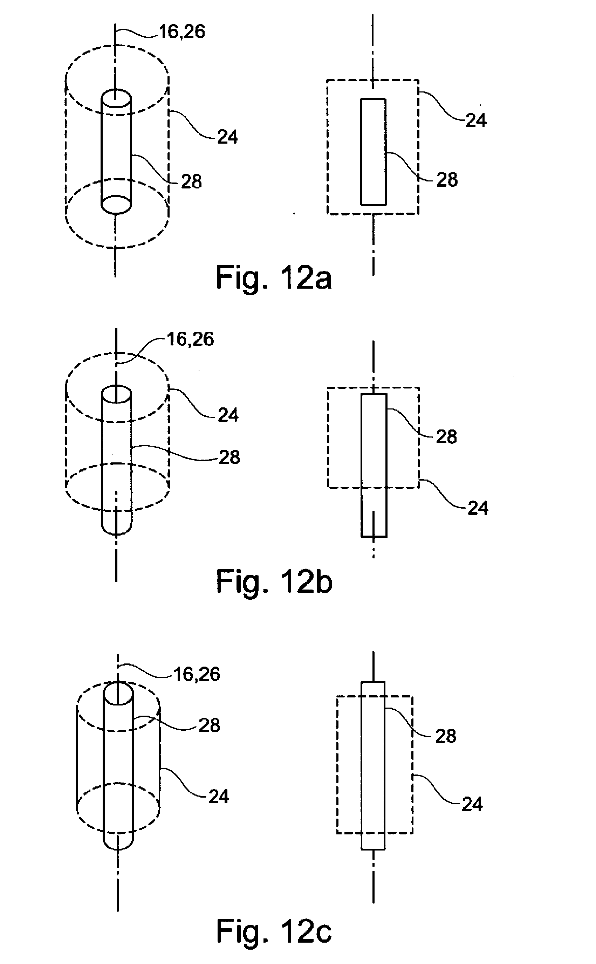

Fig. 12A bis 12C zeigen unterschiedliche Ausführungsbeispiele für das Verhältnis von zweitem Rotationskörper 28 zum virtuellen ersten Rotationskörper 24, der der Einfachheit halber in den Fig. 12A bis 12C als gestrichelte Umfangslinien dargestellt ist. Im linken Bereich der Figuren ist jeweils eine perspektivische Schemaskizze gezeigt, und rechts davon eine vereinfachte Ansicht.

An dieser Stelle sei explizit darauf hingewiesen, dass für sämtliche gezeigten Figuren und beschriebenen Ausführungsbeispiele vorgesehen sein kann, dass die Rotationsachsen horizontal, vertikal oder geneigt verlaufen, auch wenn in den Figuren bezogen auf die Blattorientierung eine vertikale Achsanordnung dargestellt ist. Mit anderen Worten, die jeweils beschriebenen Merkmale beziehen sich auf die Relationen untereinander und bilden dadurch noch keinen Bezug zur Vertikalen oder Horizontalen, es sei denn, dies wird explizit in der Beschreibung genannt oder ist aus den Figuren ersichtlich, beispielsweise durch eine Bodenschraffur.

Der zweite Rotationskörper 28 kann vollständig innerhalb des virtuellen ersten Rotationskörpers 24 angeordnet sein (Fig. 12A). Der zweite Rotationskörper 28 kann teilweise in axialer Richtung aus dem virtuellen ersten Rotationskörper herausragen, wie dies in Fig. 12B für ein Herausragen an einem Stirnende dargestellt ist, während Fig. 12C eine Variante zeigt, bei der der zweite Rotationskörper 28 an beiden Stirnenden aus dem virtuellen ersten Rotationskörper 24 herausragt.

Das Herausragen an den Stirnseiten des virtuellen Rotationskörpers ist vom Prinzip her unproblematisch, da dort keine Bewegung der Rotorblätter erfolgt, da sich diese nur im Bereich der virtuellen Mantelfläche, d.h. innerhalb davon bewegen. Bei dieser Betrachtungsweise bleiben konstruktive Überlegungen, wie z.B. die Rotorblätter an der ersten Rotationsachse 16 drehend gehalten werden können, völlig außer Betracht. Wenn der zweite Rotationskörper aus dem virtuellen ersten Rotationskörper herausragt, kann natürlich in diesen Bereichen keine unmittelbare Befestigung erfolgen, sondern es müssen anderwärtige Lager bzw. Befestigungsmöglichkeiten vorgesehen sein.

Wie bereits mehrfach dargestellt, kann der zweite Rotationskörper 28 einen über die zweite Rotationsachse 26 gleichbleibenden kreisförmigen Querschnitt aufweisen und einen Zylinder 74 (siehe Fig. 10A beispielsweise) bilden.

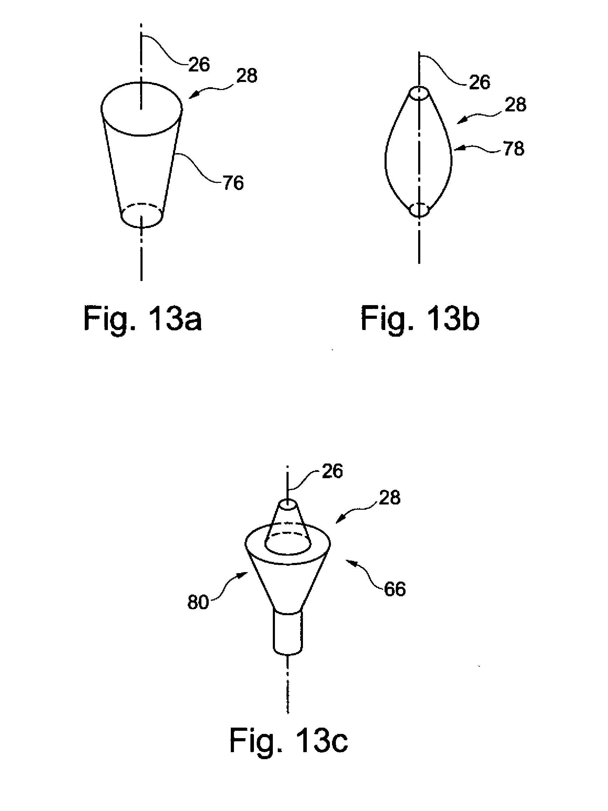

Der zweite Rotationskörper 28 kann auch als Kegelstumpf 76 ausgebildet sein (siehe Fig. 13A). Der zweite Rotationskörper 28 kann auch entlang der zweiten Rotationsachse 26 unterschiedliche Durchmesser aufweisen, zum Beispiel ausgehend von einem geringen Durchmesser mit einem stetig anwachsenden Durchmesser, der anschließend wieder verringert wird, wie dies in Fig. 13B schematisch gezeigt ist. Beispielsweise kann der zweite Rotationskörper 28 mit einer hyperbolischen Kontur 78 ausgebildet werden.

Wie bereits in Fig. 10B angedeutet, kann der zweite Rotationskörper 28 auch in Segmente 66 unterteilt sein, die zu entsprechend komplexen Gesamtformen 80 zusammengesetzt sein können. Die Segmente sind dabei stets rotationssymmetrisch.

Die Segmente können dabei miteinander verbunden sein und dementsprechend mit gleicher Geschwindigkeit angetrieben werden, oder auch unterschiedlich schnell angetrieben sein, wenn sie nicht miteinander drehstarr verbunden sind (nicht näher dargestellt).

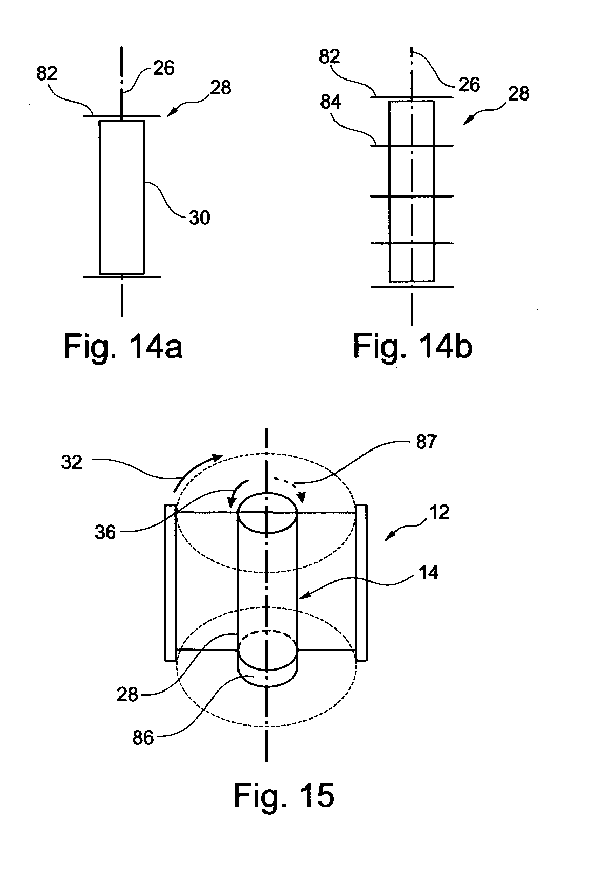

Der zweite Rotationskörper 28 kann im Bereich seines ersten und/oder zweiten Endes eine über die zweite Mantelfläche 30 hinausstehende Endscheibe 82 aufweisen, wie dies insbesondere in Fig. 14A gezeigt ist.

Der zweite Rotationskörper 28 kann auch eine Vielzahl von Scheiben 84 aufweisen, die zwischen den beiden Enden angeordnet sind, wobei die Scheiben 84 einen größeren Durchmesser aufweisen als die benachbarten Mantelflächensegmente.

In Fig. 14B sind mehrere solcher Scheiben 84 zusammen mit zwei Endscheiben 82 gezeigt, wobei jedoch darauf hingewiesen wird, dass weder die gezeigte Anzahl der Scheiben, noch die Kombination mit den Endscheiben eine zwingende Voraussetzung ist, sondern vielmehr die Scheiben 84 auch ohne die Endscheiben 82 verwendet werden können.

Fig. 15 zeigt in einer perspektivischen Ansicht eine, bezogen auf die Darstellung, unterhalb des zweiten Rotationskörpers 28 angeordnete Getriebeeinrichtung 86, die zu der Antriebsvorrichtung 34 gehört. Die Getriebeeinrichtung ist zwischen der ersten Rotoreinrichtung 12 und der zweiten Rotoreinrichtung 14 vorgesehen, wobei die Getriebeeinrichtung 86 neben der bereits erwähnten Umkehr der Rotationsrichtung eine Übersetzung der Rotationsgeschwindigkeit bewirkt.

Beispielsweise kann das Übersetzungsverhältnis der Getriebeeinrichtung 86 veränderbar sein.

Gemäß einem weiteren Beispiel weist die Getriebeeinrichtung 86 eine von der Umdrehungsgeschwindigkeit der ersten Rotoreinrichtung 12 abhängige Übersetzung auf, was beispielsweise in Abhängigkeit von einer tatsächlichen Windanströmgeschwindigkeit, bzw. Windstärke erfolgen kann.

Um bei zu großen Windgeschwindigkeiten ein zu schnelles Drehen der ersten Rotoreinrichtung 12 zu verhindern, kann die Antriebsvorrichtung 34, bzw. die Getriebeeinrichtung 86 derart eingerichtet sein, dass der zweite Rotationskörper 28 auch in der ersten Rotationsrichtung 32 angetrieben werden kann, d.h. entgegen der zweiten Rotationsrichtung 36, was in Fig. 15 durch einen gestrichelten Pfeil 87 angedeutet ist, der der zweiten Rotationsrichtung entgegengesetzt verläuft. Bei einer derartig gleichsinnigen Drehung der beiden Rotoreinrichtungen 12, 14 wird die eigentlich gewünschte Effizienz umgekehrt, d.h. der Wirkungsgrad wird auch gegenüber einer Variante ohne die zweite Getriebeeinrichtung deutlich herabgesetzt. Mit anderen Worten, das gleichsinnige Drehen bewirkt ein Abbremsen der ersten Rotoreinrichtung 12.

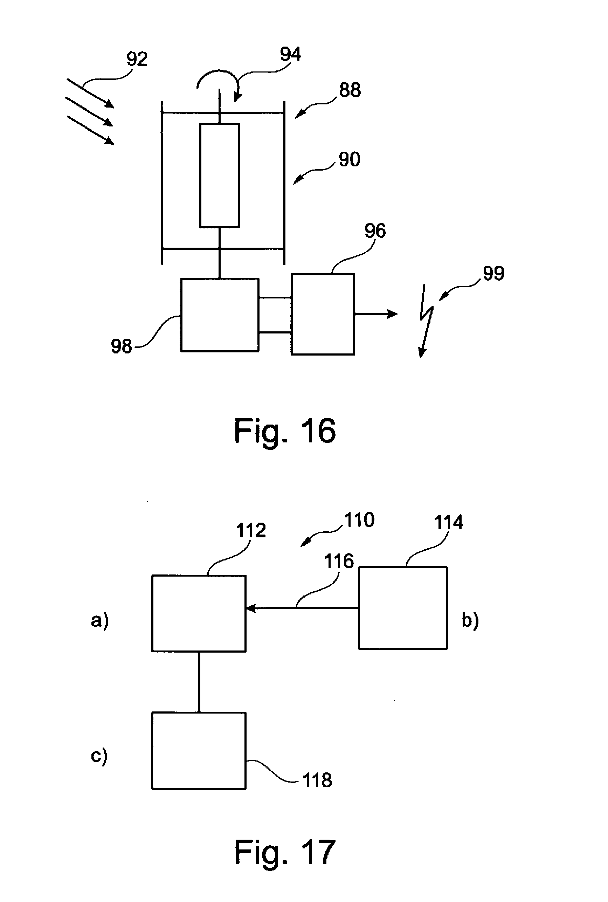

Gemäß der Erfindung ist außerdem eine Windkraftanlage 88 vorgesehen, die in Fig. 16 schematisch gezeigt ist. Die Windkraftanlage 88 weist einen Rotor 90 zur Umwandlung von Windbewegung, angedeutet mit drei Pfeilen 92, in eine Drehbewegung auf, wobei die Drehbewegung schematisch mit einem ersten Rotationspfeil 94 dargestellt ist.

Außerdem weist die Windkraftanlage 88 einen Generator 96 zur Umwandlung der Bewegungsenergie der Drehbewegung in elektrische Energie auf.

Ferner ist eine Getriebevorrichtung 98 zur Kopplung des Rotors an den Generator 96 zur Übertragung der Drehbewegung an den Generator 96 vorgesehen. Der Generator 96 erzeugt schließlich elektrische Energie, was durch ein entsprechendes Symbol 99 dargestellt ist. Gemäß der Erfindung kann die Getriebevorrichtung auch mit einer Arbeitsvorrichtung gekoppelt sein (nicht näher gezeigt); oder der Rotor ist direkt mit einer Arbeitsvorrichtung gekoppelt, die wiederum eine Art Getriebe aufweist. Statt elektrische Energie zur Verfügung zu stellen, kann mit Hilfe der Windkraft eine Arbeit, wie z.B. Pumpen etc., verrichtet werden.

Es sei darauf hingewiesen, dass die einzelnen Verbindungen zwischen den einzelnen Baugruppen in Fig. 16 selbstverständlich nur schematisch dargestellt sind, und keinerlei Hinweise auf eine tatsächliche konstruktive Ausgestaltung darstellen. Insbesondere können die einzelnen Komponenten der Windkraftanlage 88 auch integral ausgeführt sein.

Gemäß der vorliegenden Erfindung ist auch ein Verfahren 110 zum Umwandeln von Windenergie in Antriebsenergie zur Erzeugung von elektrischem Strom vorgesehen, das in Fig. 17 schematisch dargestellt ist. Das Verfahren 110 umfasst die folgenden Schritte:
- In einem ersten Rotationsschritt 112 wird eine erste Rotoreinrichtung um eine erste Rotationsachse in einer ersten Rotationsrichtung durch Windkraft rotiert, wobei die erste Rotoreinrichtung wenigstens zwei Rotorblätter aufweist, die sich auf einer Umlaufbahn um die erste Rotationsachse bewegen, wobei die Rotorblätter derart angeordnet sind, dass sie bei Rotation um die erste Rotationsachse eine virtuelle erste Mantelfläche eines virtuellen ersten Rotationskörpers beschreiben.
- In einem zweiten Rotationsschritt 114 wird eine zweite Rotoreinrichtung um eine zweite Rotationsachse in einer zweiten Rotationsrichtung rotiert, wobei die zweite Rotationsrichtung der ersten Rotationsrichtung entgegengesetzt ist, und die Rotation durch eine Antriebsvorrichtung bewirkt wird, wobei die zweite Rotoreinrichtung einen zweiten Rotationskörper mit einer geschlossenen zweiten Mantelfläche aufweist, und wobei der zweite Rotationskörper wenigstens teilweise innerhalb des virtuellen ersten Rotationskörpers angeordnet ist. Die zweite Rotoreinrichtung bewirkt dabei eine Ablenkung 116 einer durch Wind hervorgerufenen Luftströmung innerhalb der ersten Rotoreinrichtung auf der dem Wind abgewandten Seite entgegen der ersten Rotationsrichtung.
- In einem Antriebsschritt 118 wird schließlich ein Stromgenerator durch die erste Rotoreinrichtung angetrieben.

Statt des Antreibens des Generators kann ein Antreiben einer Arbeitsvorrichtung vorgesehen sein.

Der erste Rotationsvorgang 112 wird auch als Schritt a) bezeichnet, der zweite Rotationsvorgang 114 als Schritt b), und der Antriebsvorgang, bzw. Antriebsschritt 118 als Schritt c).

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Aspekte beschrieben worden sind, auch in Kombination mit anderen Merkmalen oder Schritten anderer, oben beschriebener Ausführungsbeispiele und Aspekte verwendet werden können. Bezugszeichen in den Ansprüchen sind nicht als Einschränkung anzusehen.

## Patentansprüche

1. Windkraft-Rotor (10), mit
- einer ersten Rotoreinrichtung (12); und
- einer zweiten Rotoreinrichtung (14);
wobei sich die erste Rotoreinrichtung um eine erste Rotationsachse (16) dreht und wenigstens zwei Rotorblätter (18) aufweist, die sich auf einer Umlaufbahn (20) um die erste Rotationsachse bewegen;
wobei die Rotorblätter derart angeordnet sind, dass sie bei Rotation um die erste Rotationsachse eine virtuelle erste Mantelfläche (22) eines virtuellen ersten Rotationskörpers (24) beschreiben;
wobei sich die zweite Rotoreinrichtung um eine zweite Rotationsachse (26) dreht und einen zweiten Rotationskörper (28) mit einer geschlossenen zweiten Mantelfläche (30) aufweist; wobei der zweite Rotationskörper wenigstens teilweise innerhalb des virtuellen ersten Rotationskörpers angeordnet ist; und
wobei die erste Rotoreinrichtung durch Wind in einer ersten Rotationsrichtung (32) antreibbar ist zur Umwandlung der Windkraft in eine Antriebskraft, und die zweite Rotoreinrichtung eine Antriebsvorrichtung (34) aufweist, **dadurch gekennzeichnet, dass** die zweite Rotoreinrichtung in einer zweiten Rotationsrichtung (36) antreibbar ist, die zur ersten Rotationsrichtung entgegengesetzt verläuft.

2. Windkraft-Rotor nach Anspruch 1, wobei die zweite Rotoreinrichtung eingerichtet ist, eine Ablenkung (42) einer durch Wind hervorgerufenen Luftströmung innerhalb der ersten Rotoreinrichtung auf der dem Wind abgewandten Seite (44) entgegen der ersten Rotationsrichtung zu bewirken.

3. Windkraft-Rotor nach einem der vorhergehenden Ansprüche, wobei die erste Rotationsachse eine erste vertikale Rotationsachse (16_{V}) und die zweite Rotationsachse eine zweite vertikale Rotationsachse (26_{V}) ist.

4. Windkraft-Rotor nach einem der Ansprüche 1 bis 2, wobei die erste Rotationsachse eine erste horizontale Rotationsachse (16_{H}) und die zweite Rotationsachse eine zweite horizontale Rotationsachse (26_{H}) ist.

5. Windkraft-Rotor nach einem der Ansprüche 1 bis 4, wobei die erste Rotoreinrichtung einen Darrieus-Rotor (71) aufweist.

6. Windkraft-Rotor nach einem der vorhergehenden Ansprüche, wobei die Rotorblätter an ihren beiden Enden, z.B. am oberen und unteren Ende, näher an der Rotationsachse angeordnet sind als in dem Bereich zwischen den beiden Enden; wobei die Rotorblätter bogenförmig nach außen ragen.

7. Windkraft-Rotor nach einem der vorhergehenden Ansprüche, wobei die Rotorblätter parallel zur ersten Rotationsachse verlaufen.

8. Windkraft-Rotor nach einem der vorhergehenden Ansprüche, wobei der zweite Rotationskörper vollständig innerhalb des virtuellen ersten Rotationskörpers angeordnet ist.

9. Windkraft-Rotor nach einem der vorhergehenden Ansprüche, wobei der zweite Rotationskörper entlang der zweiten Rotationsachse unterschiedliche Durchmesser aufweist.

10. Windkraft-Rotor nach einem der vorhergehenden Ansprüche, wobei die Antriebsvorrichtung eine Getriebeeinrichtung (86) zwischen der ersten Rotoreinrichtung und der zweiten Rotoreinrichtung aufweist, wobei die Getriebeeinrichtung neben der Umkehr der Rotationsrichtung eine Übersetzung der Rotationsgeschwindigkeit bewirkt.

11. Windkraft-Rotor nach einem der Ansprüche 1 bis 9, wobei die Antriebsvorrichtung einen Elektromotor aufweist, der durch elektrischen Strom antreibbar ist.

12. Windkraft-Rotor nach einem der vorhergehenden Ansprüche, wobei die Antriebsvorrichtung eingerichtet ist, den zweiten Rotationskörper wahlweise auch in der ersten Rotationsrichtung zu drehen.

13. Windkraftanlage (88), aufweisend:
- einen Rotor (90) zur Umwandlung von Windbewegung in eine Drehbewegung;
- einen Generator (96) zur Umwandlung der Bewegungsenergie der Drehbewegung in elektrische Energie; und
- eine Getriebevorrichtung (98) zur Kopplung des Rotors an den Generator zur Übertragung der Drehbewegung an den Generator;
wobei der Rotor ein Windkraft-Rotor nach einem der vorhergehenden Ansprüche ist.

14. Verwendung eines Windkraft-Rotors nach einem der Ansprüche 1 bis 12 in einer Windkraftanlage.

15. Verfahren (110) zum Umwandeln von Windenergie in Antriebsenergie zur Erzeugung von elektrischem Strom, umfassend die folgenden Schritte:
a) Rotieren (112) einer ersten Rotoreinrichtung um eine erste Rotationsachse in einer ersten Rotationsrichtung durch Windkraft; wobei die erste Rotoreinrichtung wenigstens zwei Rotorblätter aufweist, die sich auf einer Umlaufbahn um die erste Rotationsachse bewegen, wobei die Rotorblätter derart angeordnet sind, dass sie bei Rotation um die erste Rotationsachse eine virtuelle erste Mantelfläche eines virtuellen ersten Rotationskörpers beschreiben; **gekennzeichnet durch** das
b) Rotieren (114) einer zweiten Rotoreinrichtung um eine zweite Rotationsachse in einer zweiten Rotationsrichtung, die der ersten Rotationsrichtung entgegengesetzt ist, **durch** eine Antriebsvorrichtung; wobei die zweite Rotoreinrichtung einen zweiten Rotationskörper mit einer geschlossenen zweiten Mantelfläche aufweist; wobei der zweite Rotationskörper wenigstens teilweise innerhalb des virtuellen ersten Rotationskörpers angeordnet ist;
wobei die zweite Rotoreinrichtung eine Ablenkung (116) einer **durch** Wind hervorgerufenen Luftströmung innerhalb der ersten Rotoreinrichtung auf der dem Wind abgewandten Seite entgegen der ersten Rotationsrichtung bewirkt; und
c) Antreiben (118) eines Stromgenerators **durch** die erste Rotoreinrichtung.

## Claims

1. Wind-powered rotor (10) with
- a first rotor device (12); and
- a second rotor device (14);
wherein the first rotor device rotates about a first rotation axis (16) and has at least two rotor blades (18) which move on a circular path (20) about the first rotation axis;
wherein the rotor blades are arranged in such a manner that, upon rotation about the first rotation axis, said rotor blades describe a virtual first lateral area (22) of a virtual first rotation body (24);
wherein the second rotor device rotates about a second rotation axis (26) and has a second rotation body (28) with a closed, second lateral area (30); wherein the second rotation body is at least partially arranged within the virtual first rotation body; and
wherein the first rotor device is driveable in a first rotation direction (32) by means of wind in order to convert the wind force into a driving force, and the second rotor device has a drive apparatus (34),
**characterized in that** the second rotor device is driveable in a second rotation direction (36) which runs in the opposite direction to the first rotation direction.

2. Wind-powered rotor according to Claim 1, wherein the second rotor device is designed to bring about a deflection (42) counter to the first rotation direction of an airflow caused by wind within the first rotor device on the side (44) facing away from the wind.

3. Wind-powered rotor according to either of the preceding claims, wherein the first rotation axis is a first vertical rotation axis (16ᵥ) and the second rotation axis is a second vertical rotation axis (26_{V}).

4. Wind-powered rotor according to either of Claims 1 and 2, wherein the first rotation axis is a first horizontal rotation axis (16_{H}) and the second rotation axis is a second horizontal rotation axis (26_{H}).

5. Wind-powered rotor according to one of Claims 1 to 4, wherein the first rotor device has a Darrieus rotor (71).

6. Wind-powered rotor according to one of the preceding claims, wherein the rotor blades are arranged at the two ends thereof, for example at the upper and lower end, closer to the rotation axis than in the region between the two ends; wherein the rotor blades project outwards in an arcuate manner.

7. Wind-powered rotor according to one of the preceding claims, wherein the rotor blades run parallel to the first rotation axis.

8. Wind-powered rotor according to one of the preceding claims, wherein the second rotation body is arranged completely within the virtual first rotation body.

9. Wind-powered rotor according to one of the preceding claims, wherein the second rotation body has different diameters along the second rotation axis.

10. Wind-powered rotor according to one of the preceding claims, wherein the drive apparatus has a gearing device (86) between the first rotor device and the second rotor device, wherein the gearing device brings about a step-up of the rotation speed in addition to reversing the rotation direction.

11. Wind-powered rotor according to one of Claims 1 to 9, wherein the drive apparatus has an electric motor which is driveable by electric current.

12. Wind-powered rotor according to one of the preceding claims, wherein the drive apparatus is designed optionally also to rotate the second rotation body in the first rotation direction.

13. Wind-power plant (88) having:
- a rotor (90) for converting wind movement into a rotational movement;
- a generator (96) for converting the kinetic energy of the rotational movement into electrical energy; and
- a gearing apparatus (98) for coupling the rotor to the generator in order to transmit the rotational movement to the generator;
wherein the rotor is a wind-powered rotor according to one of the preceding claims.

14. Use of a wind-powered rotor according to one of Claims 1 to 12 in a wind power plant.

15. Method (110) for converting wind energy into driving energy in order to generate electric current, comprising the following steps:
a) rotating (112) a first rotor device about a first rotation axis in a first rotation direction by means of wind force; wherein the first rotor device has at least two rotor blades which move on a circular path about the first rotation axis, wherein the rotor blades are arranged in such a manner that, upon rotation about the first rotation axis, said rotor blades describe a virtual first lateral area of a virtual first rotation body;
**characterized by**
b) rotating (114) a second rotor device about a second rotation axis in a second rotation direction which is opposite the first rotation direction by means of a drive apparatus; wherein the second rotor device has a second rotation body with a closed, second lateral area; wherein the second rotation body is at least partially arranged within the virtual first rotation body;
wherein the second rotor device causes a deflection (116) counter to the first rotation direction of an airflow caused by wind within the first rotor device on the side facing away from the wind; and
c) driving (118) a current generator by means of the first rotor device.

## Revendications

1. Rotor d'éolienne (10) comprenant
- un premier dispositif de rotor (12) ; et
- un deuxième dispositif de rotor (14) ;
le premier dispositif de rotor tournant autour d'un premier axe de rotation (16) et présentant au moins deux pales de rotor (18) qui se déplacent sur une trajectoire circulaire (20) autour du premier axe de rotation ;
les pales de rotor étant disposées de telle sorte qu'elles décrivent lors de leur rotation autour du premier axe de rotation une première surface d'enveloppe virtuelle (22) d'un premier corps de rotation virtuel (24) ;
le deuxième dispositif de rotor tournant autour d'un deuxième axe de rotation (26) et présentant un deuxième corps de rotation (28) avec une deuxième surface d'enveloppe fermée (30) ; le deuxième corps de rotation étant disposé au moins en partie à l'intérieur du premier corps de rotation virtuel ; et
le premier dispositif de rotor pouvant être entraîné par le vent dans une première direction de rotation (32) pour convertir la force du vent en une force d'entraînement et le deuxième dispositif de rotor présentant un dispositif d'entraînement (34), **caractérisé en ce que** le deuxième dispositif de rotor peut être entraîné dans une deuxième direction de rotation (36) qui s'étend dans le sens inverse de la première direction de rotation.

2. Rotor d'éolienne selon la revendication 1, dans lequel le deuxième dispositif de rotor est prévu pour provoquer une déviation (42) d'un écoulement d'air causé par le vent à l'intérieur du premier dispositif de rotor du côté (44) opposé au vent à l'encontre de la première direction de rotation.

3. Rotor d'éolienne selon l'une quelconque des revendications précédentes, dans lequel le premier axe de rotation est un premier axe de rotation vertical (16_{V}) et le deuxième axe de rotation est un deuxième axe de rotation vertical (26_{V}).

4. Rotor d'éolienne selon l'une quelconque des revendications 1 à 2, dans lequel le premier axe de rotation est un premier axe de rotation horizontal (16_{H}) et le deuxième axe de rotation est un deuxième axe de rotation horizontal (26_{H}).

5. Rotor d'éolienne selon l'une quelconque des revendications 1 à 4, dans lequel le premier dispositif de rotor présente un rotor de Darrieus (71).

6. Rotor d'éolienne selon l'une quelconque des revendications précédentes, dans lequel les pales de rotor sont disposées au niveau de leurs deux extrémités, par exemple à l'extrémité supérieure et à l'extrémité inférieure, plus près de l'axe de rotation que dans la région entre les deux extrémités ; les pales de rotor faisant saillie vers l'extérieur en forme d'arc.

7. Rotor d'éolienne selon l'une quelconque des revendications précédentes, dans lequel les pales de rotor s'étendent parallèlement au premier axe de rotation.

8. Rotor d'éolienne selon l'une quelconque des revendications précédentes, dans lequel le deuxième corps de rotation est disposé complètement à l'intérieur du premier corps de rotation virtuel.

9. Rotor d'éolienne selon l'une quelconque des revendications précédentes, dans lequel le deuxième corps de rotation présente différents diamètres le long du deuxième axe de rotation.

10. Rotor d'éolienne selon l'une quelconque des revendications précédentes, dans lequel le dispositif d'entraînement présente un dispositif de transmission (86) entre le premier dispositif de rotor et le deuxième dispositif de rotor, le dispositif de transmission réalisant, en plus de l'inversion de la direction de rotation, une transmission de la vitesse de rotation.

11. Rotor d'éolienne selon l'une quelconque des revendications 1 à 9, dans lequel le dispositif d'entraînement présente un moteur électrique qui peut être entraîné par un courant électrique.

12. Rotor d'éolienne selon l'une quelconque des revendications précédentes, dans lequel le dispositif d'entraînement est prévu pour faire tourner le deuxième corps de rotation de manière sélective également dans la première direction de rotation.

13. Centrale éolienne (88), présentant :
- un rotor (90) pour convertir un mouvement du vent en un mouvement de rotation ;
- un générateur (96) pour convertir l'énergie de mouvement du mouvement de rotation en énergie électrique ; et
- un dispositif de transmission (98) pour accoupler le rotor au générateur pour transmettre le mouvement de rotation au générateur ;
le rotor étant un rotor d'éolienne selon l'une quelconque des revendications précédentes.

14. Utilisation d'un rotor d'éolienne selon l'une quelconque des revendications 1 à 12 dans une centrale éolienne.

15. Procédé (110) pour convertir l'énergie du vent en énergie d'entraînement pour générer un courant électrique, comprenant les étapes suivantes :
a) rotation (112) d'un premier dispositif de rotor autour d'un premier axe de rotation dans une première direction de rotation sous l'effet de la force du vent ; le premier dispositif de rotor présentant au moins deux pales de rotor qui se déplacent sur une trajectoire circulaire autour du premier axe de rotation, les pales de rotor étant disposées de telle sorte qu'elles décrivent lors de leur rotation autour du premier axe de rotation une première surface d'enveloppe virtuelle d'un premier corps de rotation virtuel ; **caractérisé par**
b) la rotation (114) d'un deuxième dispositif de rotor autour d'un deuxième axe de rotation dans une deuxième direction de rotation, qui est opposée à la première direction de rotation, par un dispositif d'entraînement ; le deuxième dispositif de rotor présentant un deuxième corps de rotation avec une deuxième surface d'enveloppe fermée ; le deuxième corps de rotation étant disposé au moins en partie à l'intérieur du premier corps de rotation virtuel ;
le deuxième dispositif de rotor effectuant une déviation (116) d'un écoulement d'air causé par le vent à l'intérieur du premier dispositif de rotor du côté opposé au vent à l'encontre de la première direction de rotation ; et
c) l'entraînement (118) d'un générateur de courant par le premier dispositif de rotor.
